# EUROPEAN PATENT SPECIFICATION

(11) **EP 4 321 767 B1**
(45) Date of publication and mention of the grant of the patent: **17.12.2025**
(21) Application number: 23187352.2
(22) Date of filing: 24.07.2023
(51) Int. Cl.: F16C 33/78, F16C 33/80, F16J 15/16, F16J 15/3232

(54) **BEARING UNIT WITH SEALING DEVICE**
LAGEREINHEIT MIT DICHTUNGSVORRICHTUNG
UNITÉ DE PALIER AVEC DISPOSITIF D'ÉTANCHÉITÉ

(30) Priority: 10.08.2022 IT 202200017073
(43) Date of publication of application: 14.02.2024
(73) Proprietor: Aktiebolaget SKF, 415 50 Göteborg (SE)
(72) Inventor: Bertolini, Andrea A, 54033 Carrara (IT); Nebbia Colomba, Alessio, 56121 Pisa (IT); Cavacece, Fabio, 00199 Roma (IT)
(74) Representative: Kohl, Thomas

(56) References cited:
- EP-A1- 2 995 829
- DE-A1- 102009 033 350
- JP-A- 2007 255 637
- JP-U- H0 225 774

## Description

### Technical sector of the invention

The present invention relates to a bearing unit provided with a sealing device intended for use in machines that come into frequent contact with liquid detergents, for example machines used in installations and machines used in the food industry, which for reasons of hygiene are washed daily with pressurized jets of liquid detergents.

### Prior art

As is known, bearing units with rolling elements intended for use in machinery for the food industry are washed frequently for reasons of hygiene, usually a daily wash plus a very intensive weekly wash, using jets of pressurized liquid detergent/disinfectant.

These frequent washes using liquid detergents with low surface tension cause premature wear of the sealing lips and subsequently of the bearing units, since such liquid detergents, when mixed with the washing water, tend to seep into the lubricant of the bearings precisely because of the low surface tension thereof, degrading the properties of the lubricant and preventing the lubricant from performing the primary function of lubricating the contact between rolling elements and raceways. To overcome this problem, gaskets with high-interference contact lips have been made, but the sealing action does not appear significantly better, and friction is increased, resulting in higher energy consumption and, most importantly, greater wear of the contact lips.

Labyrinth sealing devices have also been made, in particular "gutter" sealing devices, in which a first gasket and a second gasket are arranged to face one another and provided respectively with a first plurality and a second plurality of non-contacting annular sealing lips that alternate radially and overlap one another axially to create a tortuous path from the first non-contacting annular lip designed to impede the ingress of washing liquids or other impurities into the bearing unit, and to simultaneously facilitate the drainage of any washing liquids or other impurities that have entered the path itself.

Document JP 2007 255637 A discloses a rolling bearing having an annular sealing member, and the annular sealing member is attached to an annular sealing groove formed at the base end of a rotating wheel, the distal end extends toward a stationary ring, and the inside of the bearing. It has a foreign matter intrusion prevention mechanism for preventing foreign matter from entering the base, and has an annular cored bar extending from the base end toward the tip.

Document DE 10 2009 033350 A1 discloses a sealing system with an optimized sealing function for a rolling bearing. The sealing system comprises a sealing disc which is enclosed by an elastic sealing element enclosing at least one sealing lip.

Document JP H02 25774 U discloses a sealing device assembly having both a high sealing property and a retaining action for lubricant inside.

However, although these solutions effectively reduce friction and therefore energy consumption, the risk of ingress of water and detergent is not eliminated.

### Summary of the invention

The purpose of the present invention is to provide a bearing unit fitted with a sealing device to safeguard the functionality of the bearing unit by preventing external liquid contaminants, and in particular liquid detergents, from entering the bearing unit without simultaneously increasing friction.

Consequently, the present invention provides a bearing unit fitted with a sealing device used for food applications and having the features set out in the attached claims.

### Short description of the drawings

The invention is described below with reference to the attached drawings, which show a non-limiting example embodiment thereof, in which:
- Figure 1 is a schematic radial cross section view of a bearing unit and related sealing device according to a first preferred embodiment of the invention,
- Figure 2 is an enlarged view of a detail from Figure 1, and
- Figure 3 is an enlarged view of a detail from Figure 1 according to a second preferred embodiment of the invention.

### Detailed description

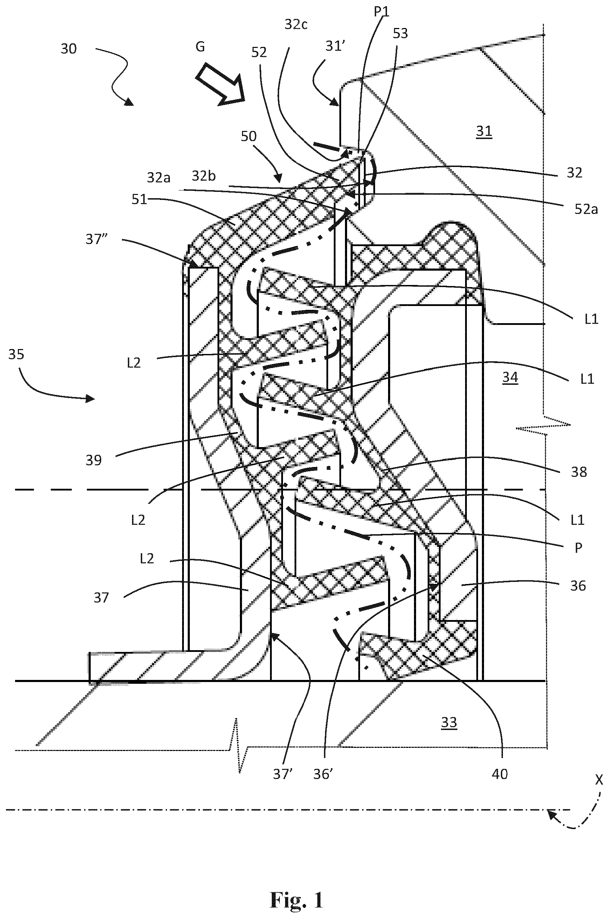

Exclusively by way of non-limiting example and with reference to Figure 1, a sealing device for a roller bearing unit 30 is indicated as a whole with reference sign 35. The bearing unit 30 comprises a first ring 31 (in the example shown, the radially outer ring 31), a second ring 33 (in the example shown, the radially inner ring 33), and the sealing device 35 interposed between the radially outer ring 31 and the radially inner ring 33. The radially outer ring 31 is further provided with an annular groove 32 formed in an annular end edge 31' of the radially outer ring 31.

Throughout the present description and the claims, terms and expressions such as "radial", "axial" and "transverse" that are used to indicate positions and directions shall be understood to refer to an axis X of symmetry of the bearing unit 30.

The sealing device 35 comprises:
- a first annular screen 36 made of sheet metal and designed to be joined to the radially outer ring 31 when in use, and
- a second annular screen 37 that is also made of sheet metal, arranged opposite the first screen 36, and designed to be joined to the radially inner ring 33 when in use.

The sealing device 35 further comprises:
- a first gasket 38 made of an elastomer and integral with a first face 36' of the first screen 36 facing the second screen 37 and on the opposite side of an inner annular chamber 34 of the bearing unit 30 delimited between the rings 31 and 33. The first gasket 38 is provided with at least one sliding annular sealing lip 40 intended to come into contact with the radially inner ring 33 when in use, and
- a second gasket 39, which is made of an elastomer, is integral with a second face 37' of the second screen 37, and in turn includes at least a first non-contacting annular sealing lip 50.

In the example embodiment shown in Figure 1, the first gasket 38 and a second gasket 39 are provided respectively with a first plurality and a second plurality of non-contacting annular sealing lips L1 and L2 that are arranged obliquely in relation to the axis X of symmetry such as to move away from the axis X of symmetry, and that alternate radially and overlap one another axially to create a tortuous path P from the first non-contacting annular lip 50 designed to impede the ingress of washing liquids or other impurities into the bearing unit 30, and to simultaneously facilitate the drainage of any washing liquids or other impurities that have entered the path P itself.

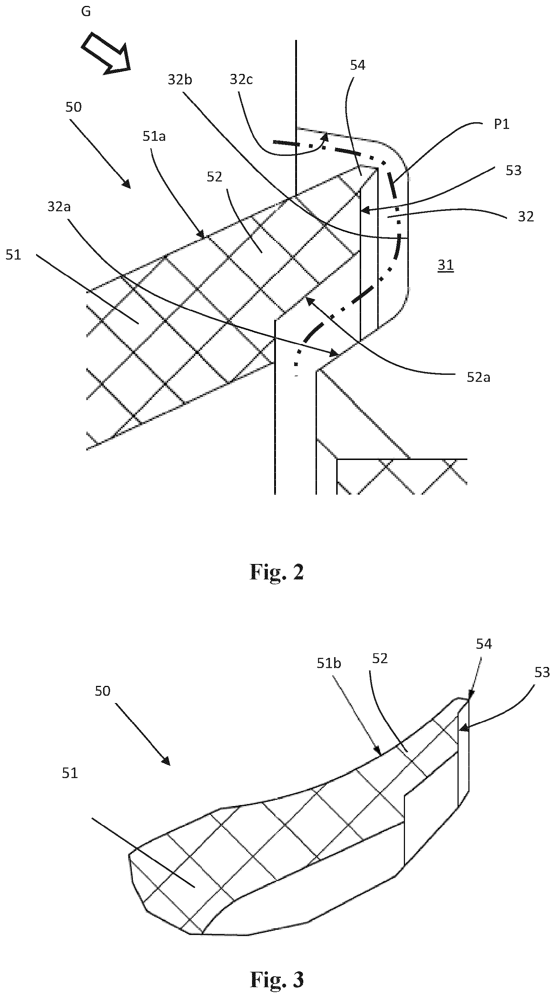

According to the invention and with reference to Figure 2, the first non-contacting annular sealing lip 50 is designed to cooperate when in use with the annular groove 32 of the radially outer ring 31, and projects from a radially outer peripheral edge 37" of the second screen 37. The annular lip 50 has no rigid frame, such as the frame formed by the screen 37, and is therefore elastically deformable, and is able to flex when in use towards the first screen 36, and consequently towards and against the annular groove 32 of the radially outer ring 31 when the screen 37 and the related lip 50 are subjected to an external force directed toward the bearing unit 30, in this case when the screen 37 is struck by a jet G of liquid, shown schematically by the arrow in Figure 1, for example a pressurized jet G of a washing liquid incorporating a surfactant detergent.

The first non-contacting annular lip 50 is a frustoconical toroid projecting axially and radially from the peripheral edge 37", tapering progressively, and includes:
- a first portion 51 that is elastically flexible, that projects obliquely and directly from the peripheral edge 37", and that has a radially outer frustoconical surface 51a, and
- when in use, a second portion 52, which tapers toward a free end 53 in the example shown, and can be contained nearly entirely inside the annular groove 32 of the radially outer ring 31, but axially removed from the surfaces thereof, when the first non-contacting annular lip 50 is not deformed.

The second portion 52 has a radially inner frustoconical surface 52a, and a distal end spur 54 designed to be contained inside the annular groove 32, but axially removed from the surfaces of the annular groove 32.

The first non-contacting annular lip 50 is arranged, as a whole, obliquely in relation to the common axis X of symmetry of the sealing device 35 and the bearing unit 30, about which the annular screens 36, 37, the annular gaskets 38, 39, and rings 31 and 33 are coaxial. In particular, the first non-contacting annular lip 50, and therefore also the first portion 51 and the second portion 52, are arranged obliquely in relation to the axis X so as to move away from the axis X towards the free end 53.

As anticipated and according to the present invention, the radially outer ring 31 is provided with the annular groove 32 designed to contain almost the entire second portion 52 and the spur 54 of the first non-contacting annular lip 50 when in use.

The inside of the annular groove 32 is defined by:
- a first radially inner frustoconical surface 32a,
- an annular surface 32b radially outside the first frustoconical surface 32a, and
- a second frustoconical surface 32c arranged radially and axially outside the annular surface 32b.

When in use and not deformed, the spur 54 of the second portion 52 of the first non-contacting annular lip 50 defines an additional labyrinth seal with the annular groove 32, and in particular with the frustoconical surface 32c and the annular surface 32b thereof, i.e. an initial section P1 of the tortuous path P that further impedes the ingress of washing liquids or other impurities into the bearing unit.

Conversely, under the external thrust of the high-pressure jet G of water and liquid detergents, the second portion 52 of the first non-contacting annular lip 50 and possibly also the spur 54 come into contact with at least one surface of the annular groove 32 of the radially outer ring 31.

Indeed, the first portion 51 and the second portion 52 of the first non-contacting annular lip 50 flex elastically toward the bottom of the annular groove 32 of the radially outer ring 31, i.e. towards the first frustoconical surface 32a of the annular groove 32. Specifically, the frustoconical surface 52a of the second portion 52 of the first non-contacting annular lip 50 comes into contact with the corresponding first frustoconical surface 32a of the annular groove 32, creating a complete seal against the external liquid towards the inside of the sealing device 35 and the bearing unit 30. Evidently, the greater the pressure of the jet G, the greater the force exchanged between the two contacting frustoconical surfaces 32a, 52a.

Naturally, the elastic flexing and deformability of the first non-contacting annular lip 50 causes the frustoconical surface 52a of the second portion 52 of the first non-contacting annular lip 50 to rest against the first frustoconical surface 32a of the annular groove 32 of the radially outer ring 31 at the same angle of inclination, even if the two surfaces do not have the same inclination when the first non-contacting annular lip 50 is not deformed. A perfect fit is therefore created by contact between the first non-contacting annular lip 50 and the annular groove 32 of the radially outer ring 31.

The first non-contacting annular lip 50 must be made entirely of elastomeric material to provide the elastic flexion required to ensure a seal is created in the presence of the jet G. Indeed, a metal support would make said lip too rigid, and therefore unsuitable for the intended function.

Advantageously, the spur 54 is also able to come into axial contact with the annular surface 32b of the annular groove 32, helping to make the seal against washing liquids even more reliable.

Once the washing cycle, and therefore the pressure exerted by the jet G of the washing water, have finished, the elasticity of the first non-contacting annular lip 50 returns to said lip to an undeformed position and the sealing device 35 continues working as a labyrinth seal impeding the ingress of external contaminants by means of the tortuous path P and the initial section P1 thereof between the spur 54 of the second portion 52 of the first non-contacting annular lip 50 and the surfaces of the annular groove 32 of the radially outer ring 31.

A second preferred embodiment of the present invention is shown in Figure 3. This second embodiment differs from the one described above only in that a radially outer concave surface 51b of the first portion 51 of the first non-contacting annular lip 50 is curved (rather than frustoconical like the surface 51a of the first embodiment) with a concavity facing radially outwards.

Compared to the first embodiment, this solution has the advantage of amplifying the effect of the elastic deformation of the first non-contacting annular lip 50 subjected to the pressure of the jet G of washing water. Indeed, the jet G is sprayed onto the concave surface 51b and therefore exerts more pressure on the first non-contacting annular lip 50, which flexes more and provides a better seal against the first frustoconical surface 32a of the annular groove 32.

The dimensioning of both of these embodiments should be optimized to optimize the performance of this novel sealing device 35.

To ensure sufficient strength and good flexibility, the thickness of the first non-contacting annular lip 50, i.e. in particular the thickness of the second portion 52 where said portion tapers toward the free end 53, should be between 0.6 mm and 0.8 mm.

To correctly match the geometry of the annular groove 32, the length of the first non-contacting annular lip 50 should be between 2.8 mm and 3.0 mm. Lower values would not guarantee the formation of a proper labyrinth between the spur 54 and the surfaces of the annular groove 32, while higher values would bring the spur 54 into contact with the annular surface 32b of the annular groove 32 when the first non-contacting annular lip 50 is not deformed, thus unnecessarily increasing the frictional losses of the bearing unit 30.

The axial depth of the annular groove, i.e. the axial distance between the annular end edge 31' of the radially outer ring 31 and the annular surface 32b of the annular groove 32b, should be between 0.55 mm and 0.65 mm. This dimension should be compatible with the length of the first non-contacting annular lip 50 so that the average thickness of the initial section P1 of the tortuous path P is approximately 0.15 mm.

The first frustoconical surface 32a should have an inclination with respect to the axis X of symmetry of approximately 35° (i.e. between 33° and 37°). The axial symmetry of the sealing device 35 causes any liquid that has penetrated the sealing device to move towards the lower portions of the sealing device under the effect of gravity. The inclination of the first frustoconical surface 32a therefore helps to drain any liquid that is inside.

Finally, the second frustoconical surface 32c should have a small inclination with respect to the axis X of symmetry in order to allow any liquid that has accumulated in the annular groove 32 to drain from the sealing device 35. This inclination must be at least 10° and in any case between 10° and 15°. Indeed, if the inclination were less than 10° there would be a risk of liquid remaining inside the annular groove, while inclinations greater than 15° could facilitate the ingress of more liquid rather than draining any liquid that may be inside.

In summary, the present invention provides the following advantages:
- defining a flexible lip that is normally non-contacting, but that can close the labyrinth with the annular groove of the outer ring in the presence of an external high-pressure water jet,
- improving the performance of labyrinth sealing devices, and more specifically "gutter" labyrinth sealing devices,
- consequently improving the protection of the entire bearing unit.

There are numerous other variants in addition to the embodiment of the invention described above. Furthermore, said embodiments are merely examples that limit neither the scope nor the application nor the possible arrangements of the invention. Indeed, although the above description enables the person skilled in the art to carry out the present invention according to at least one example embodiment thereof, many variants of the described components can also be used without thereby moving outside the scope of the invention as defined in the attached claims.

## Claims

1. Bearing unit (30) having an axis (X) of symmetry and comprising:
- a radially outer ring (31) axially delimited by an annular end edge (31'), and provided with an annular groove (32) formed in the annular end edge (31'),
- a radially inner ring (33), and
- a sealing device (35) interposed between the radially outer ring (31) and the radially inner ring (33), in turn comprising:
- a first annular screen (36) made of sheet metal, joined to the radially outer ring (31) and provided with a first sealing gasket (38) made of an elastomer, and
- a second annular screen (37) made of sheet metal, joined to the radially inner ring (33) in a position facing the first screen (36), and provided with a second sealing gasket (39), which is made of an elastomer, comprising at least a first non-contacting annular sealing lip (50), the first sealing gasket (38) and the second sealing gasket (39) together defining a tortuous path (P) designed to impede the ingress of washing liquids or other impurities into the bearing unit (30),
wherein
the first non-contacting annular sealing lip (50) cooperates with the annular groove (32) of the radially outer ring (31), projects from a radially outer peripheral edge (37") of the second screen (37), is elastically deformable, and is designed to flex toward and against the annular groove (32) of the radially outer ring (31) when struck by a jet (G) of pressurized liquid,
the bearing unit (30) being **characterized in that** the first non-contacting annular lip (50) projects axially and radially from the peripheral edge (37"), tapering progressively, and comprises:
- a first portion (51) that is elastically flexible and that projects obliquely and directly from the peripheral edge (37"), and
- a second portion (52), which tapers toward a free end (53), is integral with a spur (54), and has a radially inner frustoconical surface (52a).

2. Bearing unit (30) according to Claim 1, in which the annular groove (32) is designed to contain, when in use, almost the entire second portion (52) and the spur (54) of the first non-contacting annular lip (50) and the inside of the annular groove (32) is defined by:
- a first radially inner frustoconical surface (32a),
- an annular surface (32b) radially outside the first frustoconical surface (32a), and
- a second frustoconical surface (32c) arranged radially and axially outside the annular surface (32b).

3. Bearing unit (30) according to Claim 2, in which the spur (54) of the second portion (52) of the first non-contacting annular lip (50) defines an initial section (P1) of the tortuous path (P) with the second frustoconical surface (32c) and with the annular surface (32b) of the annular groove (32), when in use.

4. Bearing unit (30) according to Claim 2, in which the first portion (51) and the second portion (52) of the first non-contacting annular lip (50) elastically flex toward the bottom of the annular groove (32) of the radially outer ring (31) when subjected to the external thrust of the jet (G) of pressurized liquid, so that the frustoconical surface (52a) of the second portion (52) comes into contact with the corresponding first frustoconical surface (32a) of the annular groove (32) to create a complete seal.

5. Bearing unit (30) according to Claim 4, in which the spur (54) is in axial contact with the annular surface (32b) of the annular groove (32).

6. Bearing unit (30) according to Claim 1, in which the first portion (51) has a radially outer frustoconical surface (51a).

7. Bearing unit (30) according to Claim 1, in which the first portion (51) has a radially outer concave surface (51b).

8. Bearing unit (30) according to Claim 2, in which the first frustoconical surface (32a) is inclined by between 33° and 37° with respect to the axis (X).

9. Bearing unit (30) according to Claim 2, in which the second frustoconical surface (32c) is inclined by between 10° and 15° with respect to the axis (X).

## Patentansprüche

1. Lagereinheit (30) mit einer Symmetrieachse (X) und Folgendes umfassend:
- einen radial äußeren Ring (31), der axial von einer ringförmigen Endkante (31') begrenzt wird und mit einer ringförmigen Nut (32) versehen ist, die in der ringförmigen Endkante (31') ausgebildet ist,
- einen radial inneren Ring (33) und
- eine Dichtungsvorrichtung (35), die zwischen dem radial äußeren Ring (31) und dem radial inneren Ring (33) angeordnet ist und wiederum Folgendes umfasst:
- eine erste ringförmige Abschirmung (36) aus einem Metallblech, die mit dem radial äußeren Ring (31) verbunden ist und mit einer ersten Dichtung (38) versehen ist, die aus einem Elastomer gefertigt ist, und
- eine zweite radiale Abschirmung (37) aus einem Metallblech, die in einer der ersten Abschirmung (36) zugewandten Position mit dem radial inneren Ring (33) verbunden ist und mit einer zweiten Dichtung (39) versehen ist, die aus einem Elastomer gefertigt ist, die mindestens eine erste berührungslose ringförmige Dichtungslippe (50) umfasst, wobei die erste Dichtung (38) und die zweite Dichtung (39) zusammen einen gewundenen Weg (P) definieren, der dazu ausgestaltet ist, den Eintritt von Waschflüssigkeiten oder anderen Verunreinigungen in die Lagereinheit (30) zu verhindern,
wobei
die erste berührungslose ringförmige Dichtungslippe (50) mit der ringförmigen Nut (32) des radial äußeren Rings (31) zusammenwirkt, von einer radial äußeren Umfangskante (37'') der zweiten Abschirmung (37) vorsteht, elastisch verformbar und dazu ausgestaltet ist, sich zu der und gegen die ringförmige Nut (32) des radial äußeren Rings (31) zu biegen, wenn sie von einem Strahl (G) von unter Druck stehender Flüssigkeit getroffen wird,
die Lagereinheit (30) **dadurch gekennzeichnet ist, dass** die erste berührungslose ringförmige Lippe (50) von der Umfangskante (37'') axial und radial vorsteht und sich dabei zunehmend verjüngt und Folgendes umfasst:
- einen ersten Abschnitt (51), der elastisch biegsam ist und schräg und direkt von der Umfangskante (37'') vorsteht, und
- einen zweiten Abschnitt (52), der sich zu einem freien Ende (53) hin verjüngt, mit einem Vorsprung (54) integral ist und eine radial innere kegelstumpfförmige Fläche (52a) aufweist.

2. Lagereinheit (30) nach Anspruch 1, wobei die ringförmige Nut (32) dazu ausgestaltet ist, bei der Verwendung nahezu den gesamten zweiten Abschnitt (52) und den Vorsprung (54) der ersten berührungslosen ringförmigen Lippe (50) zu enthalten, und das Innere der ringförmigen Nut (32) definiert ist durch:
- eine erste radial innere kegelstumpfförmige Fläche (32a),
- eine ringförmige Fläche (32b) radial außerhalb der ersten kegelstumpfförmigen Fläche (32a) und
- eine zweite kegelstumpfförmige Fläche (32c), die radial und axial außerhalb der ringförmigen Fläche (32b) angeordnet ist.

3. Lagereinheit (30) nach Anspruch 2, wobei der Vorsprung (54) des zweiten Abschnitts (52) der ersten berührungslosen ringförmigen Lippe (50) bei der Verwendung einen Anfangsabschnitt (P1) des gewundenen Weges (P) mit der zweiten kegelstumpfförmigen Fläche (32c) und mit der ringförmigen Fläche (32b) der ringförmigen Nut (32) definiert.

4. Lagereinheit (30) nach Anspruch 2, wobei sich der erste Abschnitt (51) und der zweite Abschnitt (52) der ersten berührungslosen ringförmigen Lippe (50) zum Boden der ringförmigen Nut (32) des radial äußeren Rings (31) hin biegen, wenn sie dem Schub von außen des Strahls (G) der unter Druck stehenden Flüssigkeit ausgesetzt sind, sodass die kegelstumpfförmige Fläche (52a) des zweiten Abschnitts (52) mit der zugehörigen ersten kegelstumpfförmigen Fläche (32a) der ringförmigen Nut (32) in Kontakt kommt, um eine vollständige Abdichtung herzustellen.

5. Lagereinheit (30) nach Anspruch 4, wobei der Vorsprung (54) mit der ringförmigen Fläche (32b) der ringförmigen Nut (32) in axialem Kontakt ist.

6. Lagereinheit (30) nach Anspruch 1, wobei der erste Abschnitt (51) eine radial äußere kegelstumpfförmige Fläche (51a) aufweist.

7. Lagereinheit (30) nach Anspruch 1, wobei der erste Abschnitt (51) eine radial äußere konkave Fläche (51b) aufweist.

8. Lagereinheit (30) nach Anspruch 2, wobei die erste kegelstumpfförmige Fläche (32a) um zwischen 33° und 37° und in Bezug zur Achse (X) geneigt ist.

9. Lagereinheit (30) nach Anspruch 2, wobei die zweite kegelstumpfförmige Fläche (32c) um zwischen 10° und 15° und in Bezug zur Achse (X) geneigt ist.

## Revendications

1. Unité formant palier (30) ayant un axe (X) de symétrie et comprenant :
- une bague radialement extérieure (31) délimitée axialement par un bord d'extrémité annulaire (31'), et pourvue d'une gorge annulaire (32) formée dans le bord d'extrémité annulaire (31'),
- une bague radialement intérieure (33), et
- un dispositif d'étanchéité (35) interposé entre la bague radialement extérieure (31) et la bague radialement intérieure (33), comprenant quant à lui :
- un premier écran annulaire (36) fait de tôle, raccordé à la bague radialement extérieure (31) et pourvu d'un premier joint d'étanchéité (38) fait d'un élastomère, et
- un second écran annulaire (37) fait de tôle, raccordé à la bague radialement intérieure (33) dans une position en regard du premier écran (36), et pourvu d'un second joint d'étanchéité (39), qui est fait d'un élastomère, comprenant au moins une première lèvre d'étanchéité annulaire sans contact (50), le premier joint d'étanchéité (38) et le second joint d'étanchéité (39) définissant conjointement un chemin (P) tortueux conçu pour empêcher la pénétration de liquides de lavage ou autres impuretés dans l'unité formant palier (30),
la première lèvre d'étanchéité annulaire sans contact (50) coopérant avec la gorge annulaire (32) de la bague radialement extérieure (31), faisant saillie à partir d'un bord périphérique radialement extérieur (37'') du second écran (37), étant déformable élastiquement, et étant conçue pour fléchir vers et contre la gorge annulaire (32) de la bague radialement extérieure (31) lorsqu'elle est frappée par un jet (G) de liquide sous pression,
l'unité formant palier (30) étant **caractérisée en ce que** la première lèvre annulaire sans contact (50) fait saillie axialement et radialement à partir du bord périphérique (37''), en s'élargissant progressivement, et comprend :
- une première partie (51) élastiquement flexible, et faisant saillie obliquement et directement à partir du bord périphérique (37''), et
- une seconde partie (52), qui est biseautée vers une extrémité libre (53), est faite d'un seul tenant avec une proéminence (54), et comporte une surface radialement intérieure tronconique (52a).

2. Unité formant palier (30) selon la revendication 1, dans laquelle la gorge annulaire (32) est conçue de sorte que presque l'intégralité de la seconde partie (52) et la proéminence (54) de la première lèvre annulaire sans contact (50) s'y logent durant l'utilisation et l'intérieur de la gorge annulaire (32) est défini par :
- une première surface radialement intérieure tronconique (32a),
- une surface annulaire (32b) radialement à l'extérieur de la première surface tronconique (32a), et
- une seconde surface tronconique (32c) placée radialement et axialement à l'extérieur de la surface annulaire (32b).

3. Unité formant palier (30) selon la revendication 2, dans laquelle la proéminence (54) de la seconde partie (52) de la première lèvre annulaire sans contact (50) définit une section initiale (P1) du chemin (P) tortueux avec la seconde surface tronconique (32c) et avec la surface annulaire (32b) de la gorge annulaire (32), durant l'utilisation.

4. Unité formant palier (30) selon la revendication 2, dans laquelle la première partie (51) et la seconde partie (52) de la première lèvre annulaire sans contact (50) fléchissent élastiquement vers le fond de la gorge annulaire (32) de la bague radialement extérieure (31) lorsqu'elles sont soumises à la poussée externe du jet (G) de liquide sous pression, de telle sorte que la surface tronconique (52a) de la seconde partie (52) vient en contact avec la première surface tronconique (32a) correspondante de la gorge annulaire (32) afin de créer une étanchéité totale.

5. Unité formant palier (30) selon la revendication 4, dans laquelle la proéminence (54) est en contact axial avec la surface annulaire (32b) de la gorge annulaire (32).

6. Unité formant palier (30) selon la revendication 1, dans laquelle la première partie (51) comporte une surface radialement extérieure tronconique (51a).

7. Unité formant palier (30) selon la revendication 1, dans laquelle la première partie (51) comporte une surface radialement extérieure concave (51b).

8. Unité formant palier (30) selon la revendication 2, dans laquelle la première surface tronconique (32a) présente une inclinaison comprise entre 33° et 37° par rapport à l'axe (X).

9. Unité formant palier (30) selon la revendication 2, dans laquelle la seconde surface tronconique (32c) présente une inclinaison comprise entre 10° et 15° par rapport à l'axe (X).
